# EUROPEAN PATENT APPLICATION

(11) **EP 0 878 375 A1**
(43) Date of publication of application: **18.11.1998**
(21) Application number: 98114066.8
(22) Date of filing: 18.12.1995
(51) Int. Cl.: B62B 7/12, B62B 7/08, B62B 9/12

(54) **Seat for a baby carriage**

(30) Priority: 26.12.1994 JP 322981/94; 27.12.1994 JP 326145/94; 05.01.1995 JP 241/95
(62) Divisional of application: 95309172.5
(71) Applicant: Aprica Kassai Kabushikikaisha, Osaka-shi, Osaka 542 (JP)
(72) Inventor: Onishi, Ichiro, c/o Aprica Kassai Kabushikikaisha, Osaka-shi, Osaka (JP); Kassai, Kenzou, Osaka-shi, Osaka (JP)
(74) Representative: Abbie, Andrew Kenneth

(57) **Abstract**

In a seat for a baby carriage according to the present invention, a backrest core member (9) is held by a backrest holding member (61) through a connecting mechanism consisting of a combination of a slot (75) and a pin (76). When the backrest core member (9) is most inclined, the pin (76) is located on an end portion of the slot (75) to move the backrest core member (9) toward its lower end thereby forcibly uprighting a head guard core member (10) which is rotatably connected to a control member (80) by the movement of the backrest core member (9). Thus, a head guard portion is brought into a state substantially flush with a backrest portion in a relatively uprighted state of the backrest portion, while the head guard portion is uprighted from the upper end of the backrest portion in a most inclined state of the backrest portion.

## Description

### BACKGROUND OF THE INVENTION

### Field of the Invention

The present invention relates to a seat for a baby carriage, and more particularly, it relates to a seat which can take the form of a bed when its backrest portion is most inclined.

### Description of the Background Art

A popular seat for a baby carriage is in the form of a chair comprising a seat portion and a backrest portion. In such a seat, the backrest portion is generally so provided that its inclination angle is changeable. As to the range for changing the inclination angle of the backrest portion, the backrest portion is preferably so inclined that the seat can take the form of a bed.

Under the safety standards for the baby carriage, a seat which takes the form of a bed must be provided with a head guard portion. The head guard portion is arranged to face the top of the head of a baby who is put on the baby carriage, for preventing the baby from putting its head out of the bed-type seat or from slipping off the seat headfirst.

Such a head guard portion is necessary only when the seat takes the form of a bed. In consideration of comfortableness for the baby, therefore, it is unpreferable that the head guard portion is located above its head when the backrest portion is relatively uprighted. Thus, it is preferable that the head guard portion is substantially flush with the backrest portion when the backrest portion is relatively uprighted while the former faces the top of the baby's head when the latter is inclined into the form of a bed.

A seat for a baby carriage which can satisfy the aforementioned requirement is described in Japanese Patent Publication No. 58-33149 (1983) (Japanese Patent Laying-Open No. 57-95255 (1982)) in the name of the assignee, for example.

According to this prior art, a rigid connecting link is employed for controlling the position of a head guard portion, and the amount of displacement of this connecting link is controlled by a cam mechanism comprising a combination of a guide hole and a guide pin which is movably received therein.

However, relatively high dimensional accuracy is required for the cam mechanism comprising the combination of the guide hole and the guide pin. If the guide hole is inferior in working accuracy or the cam mechanism is inferior in assembling accuracy, for example, the connecting link may not be displaced at desire, and hence the head guard portion may not operate at desire.

Further, a seat portion, a backrest portion and the head guard portion provided on the aforementioned seat are kept in shape by a seat core member, a backrest core member and a head guard core member which are in the form of plates consisting of relatively rigid materials respectively. The seat core member, the backrest core member and the head guard core member are covered with a flexible cover sheet.

While the baby carriage described in the aforementioned gazette is not folded widthwise, a baby carriage which is foldable widthwise has a seat core member, a backrest core member and a head guard core member comprising a plurality of seat plates, a plurality of backrest plates and a plurality of head guard plates which are divided by at least single parting lines extending in parallel with the side surfaces of the baby carriage respectively, in order to allow an operation for folding the baby carriage widthwise.

However, the divided structures of the seat core member, the backrest core member and the head guard core member, which are necessary for allowing the operation for folding the baby carriage widthwise, bring the following disadvantages: When a baby is put on the seat in an open state of the baby carriage, the seat core member, the backrest core member and the head guard core member may be bent along the parting lines by the baby's weight, to dent the seat on its cross-directional center.

In a most inclined state of the backrest portion, in particular, a considerable part of the baby's weight is applied to this portion as compared with a relatively uprighted state. Consequently, the aforementioned denting of the seat is remarkably caused when the backrest portion is most inclined, in particular.

In order to minimize an influence exerted on the baby by the aforementioned denting, it is effective to provide the seat core member and the backrest core member with three seat plates and three backrest plates which are divided by pairs of parting lines extending in parallel with the side surfaces of the baby carriage respectively. In this case, the central seat plate and the central backrest plate are positioned along the cross-directional center of the baby's body, whereby the seat can be suppressed from being dented at least along the cross-directional center of the baby's body.

In order to solve the problem of denting, there has also been proposed a technique of positively hinging adjacent ones of three seat plates and those of three backrest plates with each other respectively. When the adjacent ones of the three seat plates and those of the three backrest plates are hinged with each other, the seat core member and the backrest core member are preferably bent upwardly and frontwardly respectively in response to an operation for folding the baby carriage widthwise, not to be bent downwardly and rearwardly respectively. In this case, the aforementioned denting can be suppressed by inhibiting the seat core member and the backrest core member from being bent downwardly and rearwardly respectively.

The operation for folding the baby carriage which is foldable widthwise generally progresses along with an operation of folding the baby carriage lengthwise. In this case, the seat core member and the backrest core member are so rotated that the upper surface of the former and the front surface of the latter approach to each other.

When the seat core member and the backrest core member are bent upwardly and frontwardly respectively while being so rotated that the upper surface of the former and the front surface of the latter approach to each other, however, these core members interfere with each other, and may hinder smooth folding of the baby carriage.

### SUMMARY OF THE INVENTION

An object of the present invention is to provide a seat for a baby carriage, having a head guard portion which can be reliably driven through a simple mechanism.

Another object of the present invention is to provide a seat for a baby carriage, which can reduce the aforementioned denting of a backrest portion.

Still another object of the present invention is to provide a seat for a baby carriage which is so improved that a seat core member and a backrest core member provided for keeping the seat in shape will not hinder an operation for folding the baby carriage.

In an aspect of a seat for a baby carriage according to the present invention, inclination angle fixing means comprises a backrest holding member which is rotatable about a rotation center located on a constant position which is different from the rotation center of a backrest portion and fixable at a plurality of angles.

The aforementioned backrest holding member is coupled to the backrest portion through a connecting mechanism consisting of a combination of a slot extending along the longitudinal direction of the backrest portion and a pin which is movably received in the slot, while the backrest portion is movable along its longitudinal direction. When the inclination angle of the backrest portion is changed in a relatively uprighted state of the backrest portion, no operation of the backrest holding member is transmitted to the backrest portion due to a movement of the pin in the slot, while the operation of the backrest holding member is transmitted to the backrest portion when the backrest portion is most inclined due to location of the pin on an end portion of the slot, whereby the backrest portion is moved toward its lower end.

On the other hand, control means comprises a control member which is rotatable about a rotation center located on a constant position behind that of the backrest holding member.

The aforementioned control member is rotatably connected to a head guard portion, and the junction between the head guard portion and the control member is positioned on the back side of the backrest portion beyond that between the head guard portion and the backrest portion.

As hereinabove described, the backrest portion is movable along its longitudinal direction. On the other hand, the junction between the head guard portion and the control member is positioned on the back side of the backrest portion beyond that between the head guard portion and the backrest portion. When the backrest portion is moved toward its lower end while the junction between the head guard portion and the control member is temporarily located on the constant position in such a situation, the head guard portion is rotated to be uprighted from the upper end of the backrest portion.

Thus, the backrest portion is moved toward its lower end with respect to the junction between the head guard portion and the control member when the same is brought into a most inclined state. At this time, the pin is located on the end portion of the slot, whereby the operation of the backrest holding member is transmitted to the backrest portion thereby moving the backrest portion toward its lower end. The junction between the head guard portion and the control member is substantially maintained at the constant position, whereby the head guard portion is rotated to be uprighted from the upper end of the backrest portion, as described above.

When the inclination angle of the backrest portion is changed in a relatively uprighted state of the backrest portion, on the other hand, the inclination angle of the backrest holding member is also changed in response, and displacement is caused in the connected positions of the backrest portion and the backrest holding member. Such displacement is absorbed by a movement of the pin in the slot, so that no operation of the backrest holding member is transmitted to the backrest portion as described above. When no operation of the backrest holding member is transmitted to the backrest portion, no operation is supplied to the head guard portion, which is therefore kept in a state substantially flush with the backrest portion.

Thus, according to the present invention, obtained is such a seat for a baby carriage that the head guard portion is kept in a state substantially flush with the backrest portion when the inclination angle of the backrest portion is changed in the relatively uprighted state while the head guard portion is forced to be uprighted from the upper end of the backrest portion in the most inclined state of the backrest portion. Therefore, the head guard portion can serve its original function only when this function is necessary, whereby the head guard portion will not hang over the baby's head to give the baby an unpleasant feeling when the backrest portion is relatively uprighted. When the seat takes the form of a bed, on the other hand, the head guard portion is positioned to face the top of the baby's head, whereby high safety can be attained.

As hereinabove described, the mechanism for providing the head guard portion with a preferable operation employs no cam mechanism requiring relatively high working or assembling accuracy, whereby the design is simplified and an allowable range for errors in working or assembling can be relatively widened.

In another aspect of a seat for a baby carriage according to the present invention, adjacent ones of a plurality of backrest plates and those of a plurality of head guard plates are hinged with each other on the back sides thereof respectively. Further, the respective backrest plates and the respective head guard plates are hinged with each other on the front sides thereof respectively.

According to the present invention, the plurality of backrest plates and the plurality of head guard plates are not simply lined up but hinged with each other in a backrest portion and a head guard portion respectively. Consequently, the adjacent ones of the backrest plates and the head guard plates regulate their movements with each other when the same are rotated. When the backrest portion is most inclined so that the head guard portion is uprighted from the upper end of the backrest portion, therefore, a head guard core member acts to increase the flexural strength of a backrest core member.

When the backrest portion is most inclined and a considerable part of a baby's weight is applied to the backrest portion, therefore, denting of the backrest portion is suppressed according to the present invention, whereby the seat is comfortable for the baby to sit on, and the baby can be protected against unnatural deformation of the spinal cord.

According to the present invention, further, the adjacent ones of the plurality of backrest plates and those of the plurality of head guard plates are hinged with each other on the back sides thereof respectively, whereby the cross-directional central parts of the backrest portion and the head guard portion can be readily bent to frontwardly project while high resistance can be provided against opposite bending. This also contributes to suppression of denting of the backrest portion which is caused by application of the baby's weight. This advantage is effective particularly in the relatively uprighted state of the backrest portion.

In order to more completely effectuate the aforementioned advantage, the plurality of backrest plates and the plurality of head guard plates preferably have end surfaces butting with each other between adjacent ones thereof when these plates are substantially flush with each other.

According to the present invention, in addition, the respective backrest plates and the respective head guard plates are hinged with each other on the front sides thereof, whereby the head guard portion can be smoothly rotated to be uprighted from the upper end of the backrest portion.

In still another aspect of a seat for a baby carriage according to the present invention, the seat comprises a pair of belt mounting members which are positioned on both sides of the baby carriage to approach to each other in response to an operation for folding the baby carriage widthwise, and a flexible belt which extends across the pair of belt mounting members so that its end portions are mounted on the belt mounting members respectively. The lower end of a backrest core member is held by this belt.

In an open state of the baby carriage, the belt is maintained in a relatively strained state. Thus, the lower end of the backrest core member is kept in a stable position.

When the baby carriage is folded, on the other hand, the pair of belt mounting members approach to each other. Thus, the belt is so loosened that the lower end of the backrest core member is readily displaceable. When a seat core member and the backrest core member are bent upwardly and frontwardly respectively while these core members are so rotated that the upper surface of the seat core member and the front surface of the backrest core member approach to each other and the core members interfere with each other, therefore, the backrest core member can be readily displaced to avoid interference with the seat core member.

According to the present invention, therefore, the operation for folding the baby carriage can be prevented from hindrance of its progress due to interference between the seat core member and the backrest core member.

According to the present invention, three seat plates are preferably hinged with each other between adjacent ones thereof on the lower sides, while having end surfaces butting with each other between adjacent ones thereof when the same are substantially flush with each other. Further, three backrest plates are also preferably hinged with each other between adjacent ones thereof on the lower sides, while having end surfaces butting with each other between adjacent ones thereof when the same are substantially flush with each other. Due to such structures, it is possible to obtain a seat for a baby carriage which can reliably suppress the aforementioned denting by the baby's weight while enabling upward and frontward bending of the seat core member and the backrest core member.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a baby carriage 2 comprising a seat 1 according to an embodiment of the present invention;
Fig. 2 is a perspective view showing the overall baby carriage 2 appearing in Fig. 1, with a backrest portion 4 which is in a most inclined state;
Fig. 3 is a perspective view corresponding to Fig. 1, showing the baby carriage 2 from which a cover sheet 7 for the seat 1 is removed;
Fig. 4 is a perspective view corresponding to Fig. 2, showing the baby carriage 2 from which the cover sheet 7 for the seat 1 is removed;
Fig. 5 is a perspective view showing a folded state of the baby carriage 2 appearing in Fig. 1, from which the cover sheet 7 for the seat 1 is removed;
Fig. 6 is a perspective view of the structure related to the seat 1 shown in Fig. 3;
Fig. 7 is a perspective view of the structure related to the seat 1 shown in Fig. 4;
Fig. 8 is a sectional view taken along the line VIII - VIII in Fig. 6;
Fig. 9 is a sectional view taken along the line IX - IX in Fig. 6;
Fig. 10 is a perspective view of the structure shown in Fig. 6, which is in an intermediate state of an operation for folding the baby carriage 2;
Fig. 11 is a perspective view of the structure related to the seat 1 of the baby carriage 2 shown in Fig. 5;
Fig. 12 is a side elevational view showing the baby carriage 2 appearing in Fig. 4 in a partially fragmented or omitted manner;
Fig. 13 is a side elevational view showing a mechanism for changing the inclination angle of a backrest core member 9, which is in a most uprighted state;
Fig. 14 is a side elevational view corresponding to Fig. 13, showing the backrest core member 9 which is in an intermediately inclined state;
Fig. 15 is a side elevational view corresponding to Fig. 13, showing the backrest core member 9 which is in a most inclined state;
Fig. 16 is a side elevational view showing a principal part of Fig. 13 in an enlarged manner;
Fig. 17 is a sectional view taken along the line XVII - XVII in Fig. 16; and
Fig. 18 is a perspective view showing a portion around the upper end of the backrest core member 9 which is in the state shown in Fig. 13.

### DESCRIPTION OF THE PREFERRED EMBODIMENTS

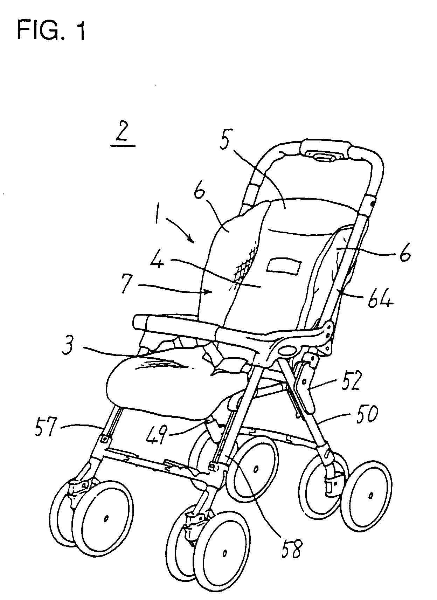

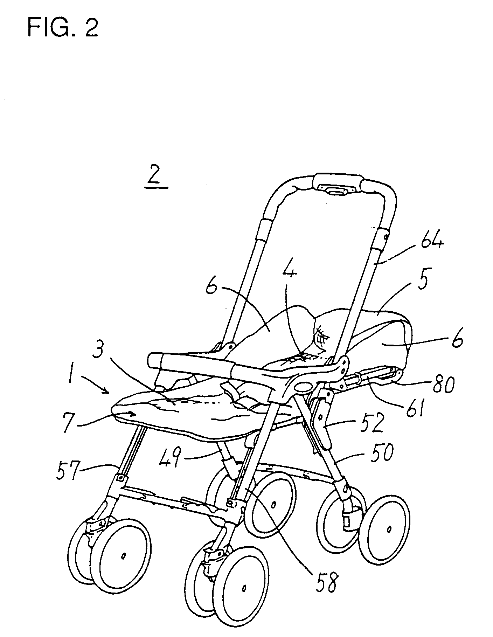

Figs. 1 and 2 are perspective views showing a baby carriage 2 comprising a seat 1 according to an embodiment of the present invention. The seat 1 comprises a seat portion 3, a backrest portion 4 which is uprighted from the rear end of the seat portion 3 so that its inclination angle is changeable, a head guard portion 5 which is rotatably connected to the upper end of the backrest portion 4, and a pair of side guard portions 6 which are uprighted from both sides of the backrest portion 4 respectively. Referring to Fig. 1, the backrest portion 4 is in a relatively uprighted state, and the head guard portion 5 is substantially flush with the backrest portion 4. Referring to Fig. 2, on the other hand, the backrest portion 4 is in a most inclined state, and the head guard portion 5 is in a state uprighted from the upper end of the backrest portion 4.

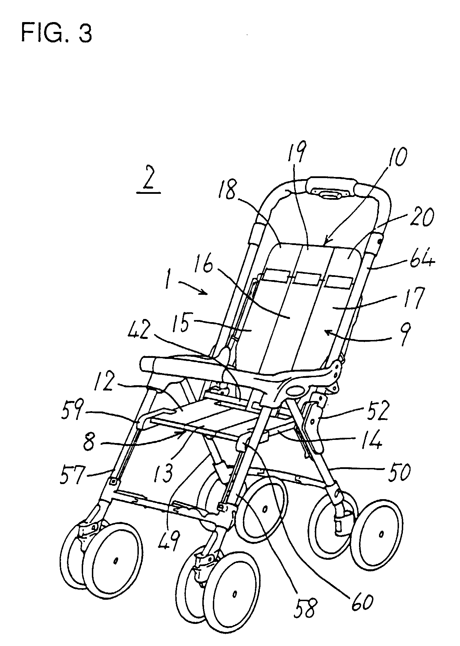

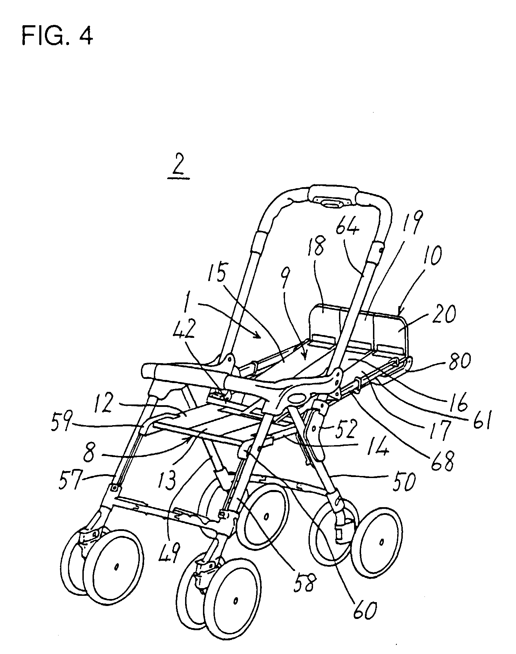

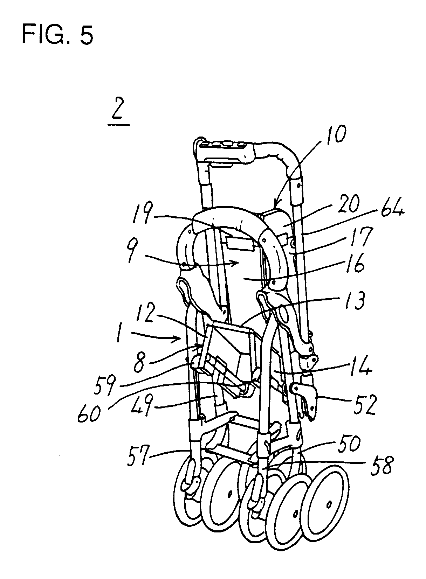

The surface of such a seat 1 is provided by a flexible cover sheet 7 of cloth, for example. Preferably, a proper cushion material is added to the cover sheet 7. Figs. 3 and 4 show the baby carriage 2 from which the cover sheet 7 is removed, in correspondence to Figs. 1 and 2 respectively. Fig. 5 shows a folded state of the baby carriage 2, from which the cover sheet 7 is removed.

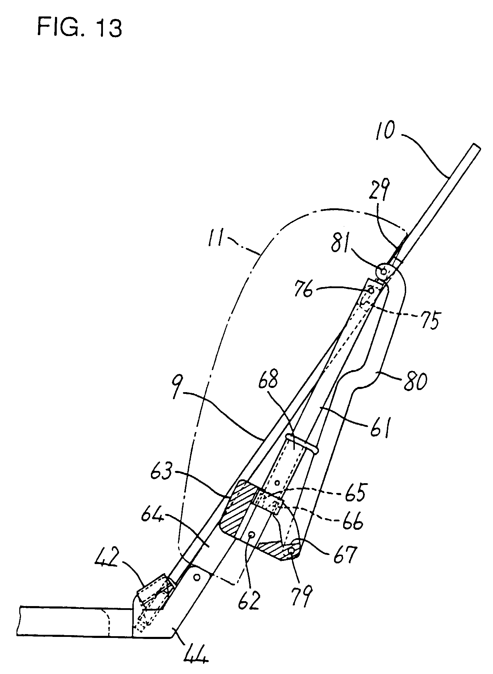

The seat portion 3, the backrest portion 4, the head guard portion 5 and the side guard portions 6 comprise a seat core member 8, a backrest core member 9, a head guard core member 10 and side guard core members 11 which are in the form of plates consisting of relatively rigid materials respectively, and are kept in shape by these core members 8 to 11 respectively. The side guard core members 11, which are not shown in Figs. 3 to 5, are illustrated by phantom lines in Figs. 13 to 18.

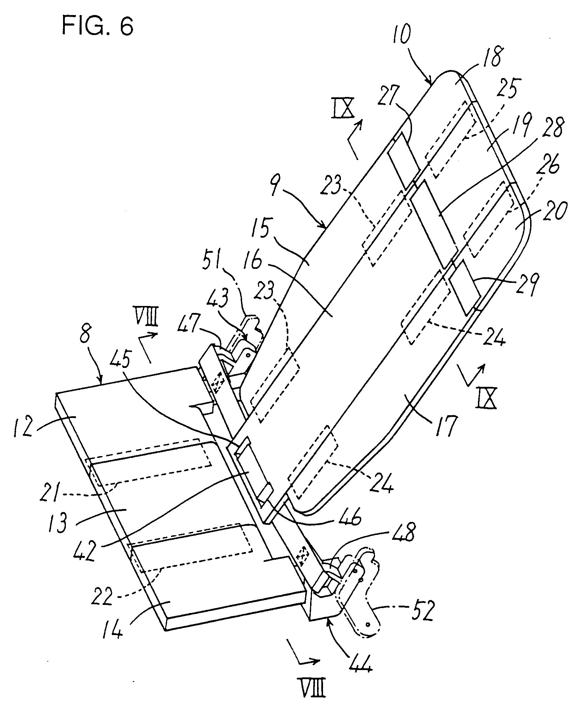

Comparing Figs. 3 and 5 with each other, it is understood that the baby carriage 2 is folded widthwise. In order to allow such an operation for folding the baby carriage 2 widthwise, the seat core member 8, the backrest core member 9 and the head guard core member 10 have three seat plates 12 to 14, three backrest plates 15 to 17 and three head guard plates 18 to 20, which are divided by pairs of parting lines extending in parallel with the side surfaces of the baby carriage 2, respectively. Figs. 6 to 11 show the seat core member 8, the backrest core member 9 and the head guard core member 10 in detail.

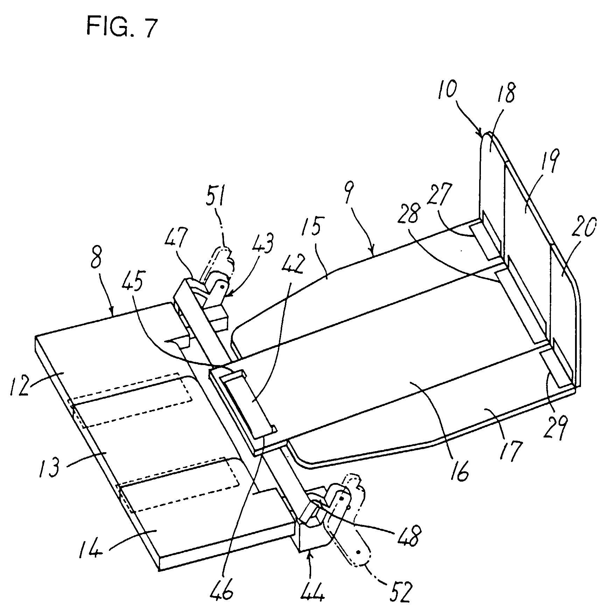

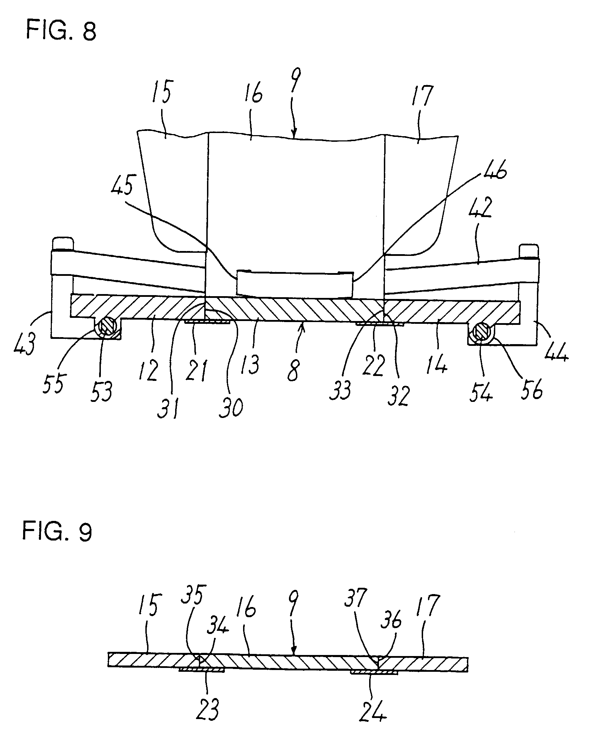

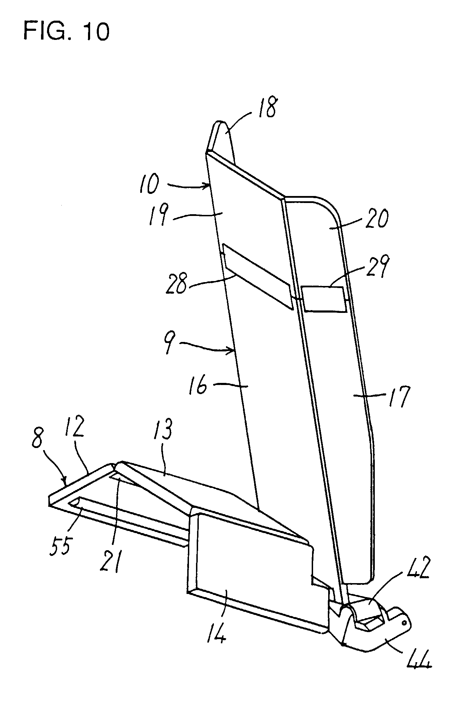

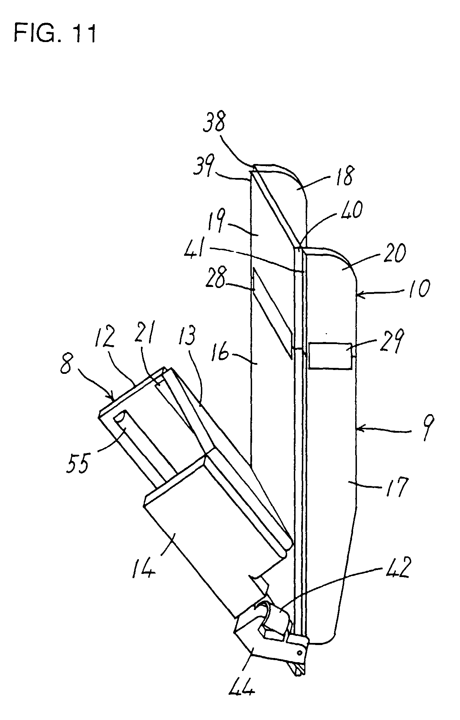

Figs. 6 and 7 show states corresponding to those shown in Figs. 3 and 4 respectively. Figs. 8 and 9 are sectional views taken along the lines VIII - VIII and IX - IX in Fig. 6 respectively. Figs. 10 and 11 illustrate shapes of the seat core member 8, the backrest core member 9 and the head guard core member 10 provided in response to the operation for folding the baby carriage 2. Fig. 10 shows states of the core members 8 to 10 in an intermediate stage of the folding operation, while Fig. 11 shows those after folding of the baby carriage 2 in correspondence to the state shown in Fig. 5.

Adjacent ones of the three seat plates 12 to 14, those of the three backrest plates 15 to 17 and those of the three head guard plates 18 to 20 are hinged with each other. Further, the respective ones of the backrest plates 15 to 17 are hinged with those of the head guard plates 18 to 20. These plates 15 to 20 are hinged with each other by hinge tapes 21 consisting of a repeatedly bendable flexible sheet material, for example. The hinge tapes 21 to 29 are applied to prescribed positions by a method such as adhesion, sticking or welding. When the seat plates 12 to 14, the backrest plates 15 to 17 and the head guard plates 18 to 20 are obtained by molding resin, the hinge tapes 21 to 29 may be inserted in the mold assembly, so that the same are applied to the plates 12 to 20 simultaneously with the molding.

The hinge tapes 21 and 22 are positioned on lower sides of the seat plates 12 to 14, while the hinge tapes 23 and 24 are positioned on back sides of the backrest plates 15 to 17. The hinge tapes 25 and 26 are positioned on back sides of the head guard plates 18 to 20, while the hinge tapes 27 to 29 are positioned on front sides of the backrest plates 15 to 17 and the head guard plates 18 to 20.

Thus, the seat core member 8 can be bent upwardly as shown in Figs. 10 and 11, while the backrest core member 9 and the head guard core member 10 can be bent frontwardly. Further, the head guard core member 10 can be bent to be uprighted from the upper end of the backrest core member 9, as shown in Fig. 7.

When the seat plates 12 to 14 are substantially flush with each other, the adjacent backrest plates 12 and 13 have end surfaces 30 and 31 butting with each other respectively, and the adjacent backrest plates 13 and 14 also have end surfaces 32 and 33 butting with each other respectively, as clearly shown in Fig. 8. Thus, the seat core member 8 which can be bent as shown in Figs. 10 and 11 is strongly maintained in a plane state when the seat plates 12 to 14 are substantially flush with each other as shown in Fig. 8 etc., due to the butting of the end surfaces 30, 31, 32 and 33. Thus, the seat portion 3 can be suppressed from being dented on its central part by the weight of a baby who is put on the seat 1, so that the baby is not be unnaturally fatigued.

The backrest guard core member 9 also has a structure similar to the above. When the backrest plates 15 to 17 are substantially flush with each other, the adjacent backrest plates 15 and 16 have end surfaces 34 and 35 butting with each other respectively, and the adjacent backrest plates 16 and 17 also have end surfaces 36 and 37 butting with each other respectively, as clearly shown in Fig. 9. Thus, the backrest core member 9 which can be bent as shown in Figs. 10 and 11 is strongly maintained in a uniform plane state when the same is in the state shown in Fig. 8.

The head guard core member 10 also has a structure similar to the above. When the head guard plates 18 to 20 are substantially flush with each other, the adjacent head guard plates 18 and 19 have end surfaces 38 and 39 butting with each other respectively, and the adjacent head guard plates 19 and 20 also have end surfaces 40 and 41 butting with each other respectively, as shown in Fig. 11.

Such a structure of maintaining a plane state through butting end surfaces is preferably employed also between the backrest plates 15 to 17 and the head guard plates 18 to 20, for keeping the backrest core member 9 and the head guard core member 10 in a state substantially flush with each other.

As hereinabove described, the backrest plates 15 to 17 of the backrest core member 9 are kept in a state substantially flush with each other by the butting end surfaces 34 to 37, as clearly shown in Fig. 9. When the backrest portion 4, i.e., the backrest core member 9, is in the most inclined state as shown in Figs. 2, 4 and 7, however, a considerable part of the baby's weight is applied to the backrest core member 9 as compared with the relatively uprighted state. Thus, the backrest portion 4 tends to be dented on its central part. According to this embodiment, such denting of the backrest portion 4 can be considerably suppressed due to the presence of the head guard core member 10.

As clearly shown in Fig. 7, the head guard core member 10 is uprighted from the upper end of the backrest core member 9 which is in the most inclined state, to increase the flexural strength of the backrest core member 9. Consequently, the backrest portion 4 is suppressed from denting, whereby the seat 1 is comfortable for the baby to sit on, while the baby can be protected against unnatural deformation of the spinal cord.

In response to the operation for folding the baby carriage 2, the seat core member 8 and the backrest core member 9 are bent upwardly and frontwardly respectively while the same are so rotated that the upper surface of the seat core member 8 and the front surface of the backrest core member 9 approach to each other, as successively shown in Figs. 10 and 11. As understood from such a folding situation, the seat core member 8 and the backrest core member 9 operate to interfere with each other. Therefore, the folded state of the baby carriage 2 shown in Fig. 5 cannot be attained unless such interference is canceled.

In order to cope with this, the lower end of the central backrest plate 16 forming the backrest core member 9 is held by a flexible belt 42 according to this embodiment. The belt 42 extends across a pair of belt mounting members 43 and 44, so that its end portions are mounted on these belt mounting members 43 and 44. In more concrete terms, the belt 42 successively passes through two slots 45 and 46 which are provided in the lower end of the backrest plate 16, thereby holding the backrest plate 16. On the other hand, the belt mounting members 43 and 44 are provided with rings 47 and 48 which are inserted in loop-shaped portions provided on the end portions of the belt 42 respectively.

The belt mounting members 43 and 44 are positioned on both side portions of the baby carriage 2, to approach to each other in response to the operation for folding the baby carriage 2 widthwise. These belt mounting members 43 and 44 are mounted on angle members 51 and 52 which are attached to rear legs 49 and 50 of the baby carriage 2 respectively. The belt mounting members 43 and 44 hold shafts 53 and 54 respectively, as shown in Fig. 8. The shafts 53 and 54 are received in bearings 55 and 56 which are provided on the lower surfaces of the seat plates 12 and 14 respectively, to be rotatable in the bearings 55 and 56 about the axes thereof respectively. The respective front ends of the shafts 53 and 54 are held by brackets 59 and 60 which are mounted on front legs 57 and 58 of the baby carriage 2 respectively.

In an open state of the baby carriage 2, the belt 42 is kept in a relatively strained state. Therefore, the lower end of the backrest core member 9 is maintained in a stable position.

When the baby carriage 2 is folded, on the other hand, the pair of belt mounting members 43 and 44 approach to each other. Thus, the seat core member 8 and the backrest core member 9 are bent upwardly and frontwardly respectively, while the belt 42 is loosened. Therefore, the seat core member 8 and the backrest core member 9 are so rotated that the upper surface of the former and the front surface of the latter approach to each other. When the seat core member 8 collides with the backrest core member 9 through the cover sheet 7, the backrest core member 9 is displaced in response to this collision, to avoid interference with the seat core member 8. Consequently, the operation for folding the baby carriage 2 is prevented from hindrance of its progress by interference between the seat core member 8 and the backrest core member 9.

In order to allow the aforementioned relative movements of the seat member 8 and the backrest core member 9, the cover sheet 7 is loosened in the boundary portion between the seat portion 3 and the backrest portion 4.

A mechanism for frontwardly bending the backrest core member 9 is described later.

Mechanisms for providing the operations of the backrest core member 9 and the head guard core member 10 shown in Figs. 6 and 7 respectively are now described.

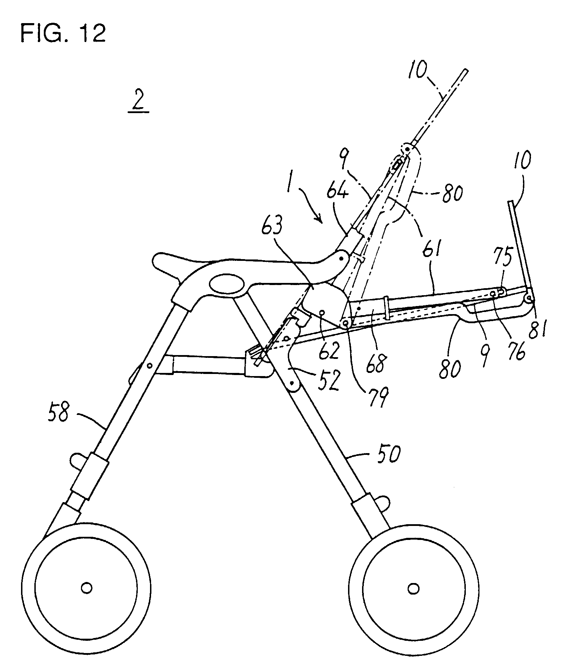

Fig. 12 is a side elevational view showing the baby carriage 2 in a partially omitted or fragmented manner. While the respective elements shown in Figs. 12 to 18 are symmetrically provided on both sides of the baby carriage 2, the following description with reference to these figures is made only on those provided on one side.

A backrest holding member 61 is provided as inclination angle fixing means for fixing a changed inclination angle of the backrest portion 4. The backrest holding member 61 is mounted on an adjusting bracket 63 to be rotatable about a pin 62 serving as a rotation center. The adjusting bracket 63 is mounted on a push rod 64 of the baby carriage 2. The pin 62 is located on a position which is different from the rotation center of the backrest portion 4.

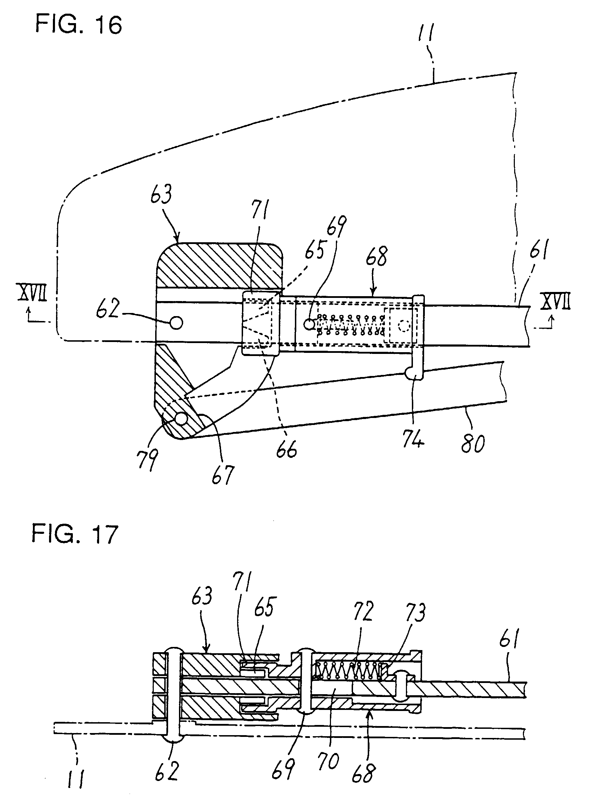

As clearly shown in Fig. 16, the adjusting bracket 63 is provided with a plurality of engaging projections 65 and 66 and an engaging wall 67.

On the other hand, an engaging sleeve 68 is provided on the backrest holding member 61, to be movable along its longitudinal direction. As clearly shown in Fig. 17, the moving range of the engaging sleeve 68 is defined by a pin 69 which is held by the engaging sleeve 68 and a longitudinal guide slot 70 which is provided in the backrest holding member 61 for receiving the pin 69. The engaging sleeve 68 is provided on its one end with an engaging portion 71, which selectively engages with the aforementioned engaging projection 65 or 66. A spring 72 is arranged between a part of the engaging sleeve 68 and a contact member 73 which is fixed to the backrest holding member 61, in order to urge the engaging sleeve 68 so that the engaging portion 71 engages with the engaging projection 65 or 66. The engaging sleeve 68 is provided on another end with an operating part 74 for moving the engaging sleeve 68 to separate the engaging portion 71 from the engaging projection 65 or 66.

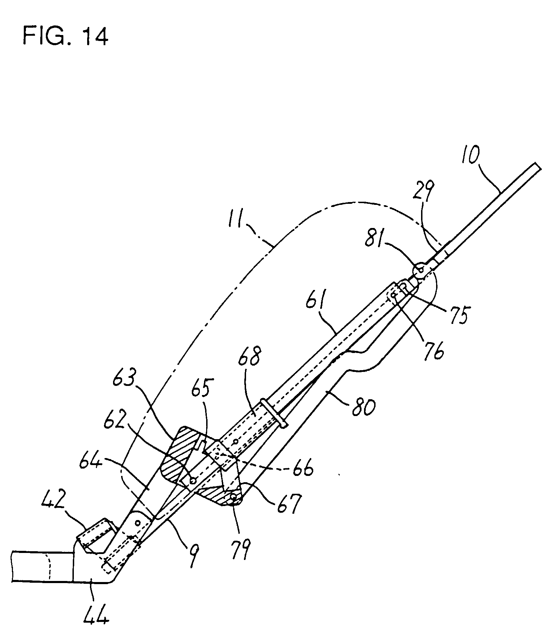

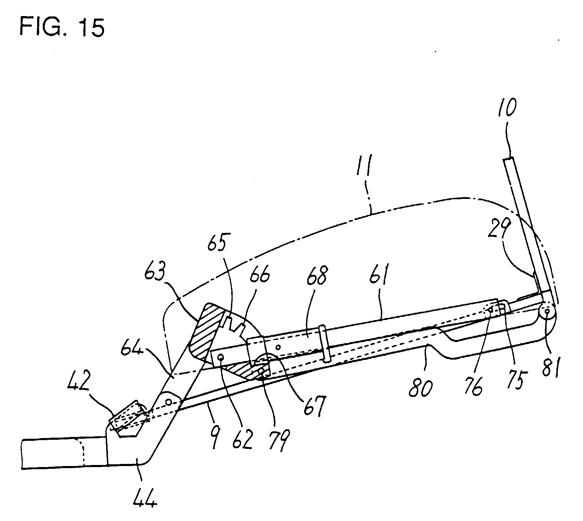

Thus, the operating part 74 is driven by a finger or the like to move the engaging sleeve 68 against the elasticity of the spring 72 thereby separating the engaging portion 71 from the engaging projection 65 or 66, so that the backrest holding member 61 is rotatable about the pin 62. When the engaging portion 71 engages with the engaging projection 65 as shown in Fig. 16, the backrest holding member 61 is fixed in the most uprighted state, as shown in Fig. 13. When the engaging portion 71 engages with the engaging projection 66, on the other hand, the backrest holding member 61 is fixed in an intermediately inclined state, as shown in Fig. 14. When the engaging sleeve 68 comes into contact with the engaging wall 67, further, the backrest holding member 61 is fixed in the most inclined state, as shown in Fig. 15.

The lower end portion of the aforementioned side guard core member 11 is shown in Figs. 16 and 17 in phantom lines. This lower end portion of the side guard core member 11 is held by the pin 62.

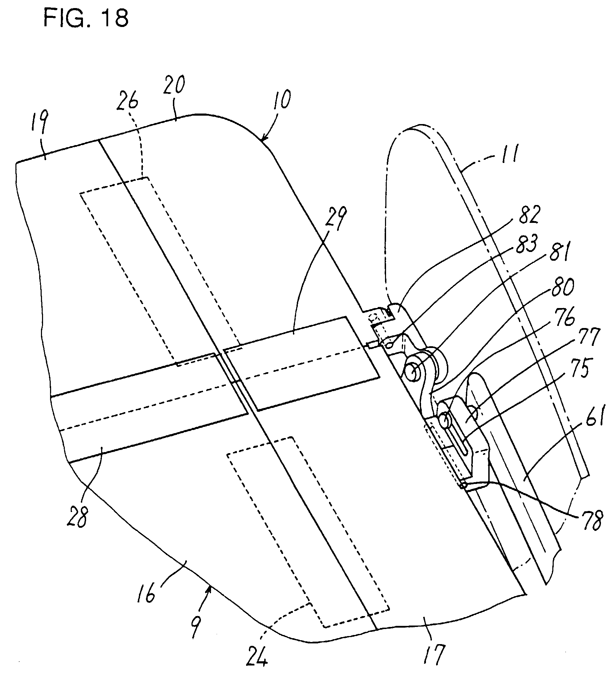

Fig. 18 shows the upper end of the backrest holding member 61. The backrest holding member 61 is connected to the backrest portion 4 through a connecting mechanism consisting of a combination of a slot 75 extending along the longitudinal direction of the backrest portion 4 and a pin 76 which is movably received in the slot 75. In more concrete terms, the pin 76 is provided on the upper end of the backrest holding member 61. On the other hand, the slot 75 is provided in a connecting bracket 77 which is mounted on a side portion of the backrest plate 17 forming the backrest core member 9 included in the backrest portion 4. The connecting bracket 77 is mounted on the backrest plate 17 to be rotatable about a pin 78. The rotation about the pin 78 enables the aforementioned bending of the backrest core member 9 shown in Figs. 10 and 11.

In the connecting mechanism consisting of the combination of the slot 75 and the pin 76 for connecting the backrest holding member 61 with the backrest portion 4, the slot and the pin may alternatively be provided on the backrest holding member 61 and the backrest portion 4 respectively, contrarily to the illustrated structure of this embodiment.

As shown by phantom lines in Fig. 18, the upper end of the side guard core member 11 is positioned between the backrest holding member 61 and the connecting bracket 77, and held by the pin 76. Thus, the side guard core member 11 operates integrally with the backrest holding member 61.

As shown in Figs. 12 to 16, a control member 80 is provided to rotate about a pin 79 which is positioned behind the pin 62 in the adjusting bracket 63. Fig. 18 shows the upper end of the control member 80. This control member 80 is rotatably connected to the head guard portion 5 through a pin 81. In more concrete terms, the control member 80 is rotatably connected to a connecting bracket 82 which is mounted on a side portion of the head guard plate 20 forming the head guard core member 10 included in the head guard portion 5. The connecting bracket 82 is connected to the head guard plate 20 through a pin 83. Therefore, the connecting bracket 82 is rotatable about the pin 83 with respect to the head guard 20. This rotation allows the frontward bending of the head guard core member 10, as shown in Figs. 10 and 11.

The junction between the head guard portion 5 and the control member 80, i.e., the pin 81, is positioned on the back side of the backrest portion 4 beyond the junction between the head guard portion 5 and the backrest portion 4, i.e., a hinge axis defined by the hinge tapes 27 to 29.

The backrest portion 4, more specifically the backrest core member 9, is held through the belt 42 with respect to the body part of the baby carriage 2 and held through the connecting mechanism consisting of the combination of the slot 75 and the pin 76 with respect to the backrest holding member 61, whereby the same is movable along its longitudinal direction.

When the backrest core member 9 is in the most uprighted state as shown in Fig. 13, the head guard core member 10 and the backrest core member 9 are substantially flush with each other. Further, the pin 76 is positioned on one end, i.e., the upper end of the slot 75.

When the backrest core member 9 is in the intermediately inclined state as shown in Fig. 14, on the other hand, the control member 80 upwardly moves the backrest core member 9 through the head guard core member 10. In other words, the backrest core member 9 is moved toward the upper side along its longitudinal direction. At this time, the pin 76 is merely moved toward the other end, i.e., the lower end of the slot 75, and no operation of the backrest holding member 61 is transmitted to the backrest core member 9. Thus, the head guard core member 10 is kept in the state substantially flush with the backrest core member 9.

When the backrest core member 9 is in the most inclined state as shown in Fig. 15, the operation of the backrest holding member 61 is transmitted to the backrest core member 9 since the pin 76 is already positioned on the lower end of the slot 75, whereby the backrest core member 9 is further moved toward its lower end. At this time, the pin 81 is positioned on the back side of the backrest portion 4 beyond the hinge axis which is defined by the hinge tapes 27 to 29 and kept in this position by the control member 80, whereby the head guard core member 10 is rotated into the state uprighted from the upper end of the backrest core member 9 in response to the aforementioned movement of the backrest core member 9. Thus, the head guard portion 5 is uprighted from the upper end of the backrest portion 4, as shown in Fig. 2.

When the baby carriage 2 is returned from the state shown in Fig. 15 to that shown in Fig. 13, on the other hand, the head guard core member 10 is substantially flush with the backrest core member 9. When the baby carriage 2 is returned to the state shown in Fig. 14 from that shown in Fig. 15, however, the head guard core member 10 is inevitably kept in the state uprighted from the upper end of the backrest core member 9 although the backrest core member 9 is returned to the intermediately inclined state. In order to bring the head guard core member 10 into the state substantially flush with the backrest core member 9 as shown in Fig. 14, therefore, force is directly applied to the head guard core member 10, i.e., the head guard portion 5, to forcibly rotate the same. When the baby carriage 2 is temporarily returned to the state shown in Fig. 13 to be then brought into the state shown in Fig. 14 again, the aforementioned operation on the head guard portion 5 is unnecessary.

While the backrest core member 9 comprises three backrest plates 15 to 17 and the head guard core member 10 comprises three head guard plates 18 to 20 in the aforementioned embodiment, the backrest core member and the head guard core member may be divided into arbitrary numbers of portions respectively.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A seat for a baby carriage comprising:
a seat portion (3);
a backrest portion (4) being uprighted from the rear end of said seat portion (3) so that its inclination angle is changeable;
a head guard portion (5) being rotatably connected to the upper end of said backrest portion (4);
inclination angle fixing means for fixing changed said inclination angle of said backrest portion (4); and
control means for bringing said head guard portion (5) into a state being substantially flush with said backrest portion (4) in a relatively uprighted state of said backrest portion (4) while bringing said head guard portion (5) into a state being uprighted from the upper end of said backrest portion (4) in a most inclined state of said backrest portion (4), wherein
said inclination angle fixing means comprises a backrest holding member (61) being rotatable about a rotation center (62) being located on a constant position being different from the rotation center of said backrest portion (4) and fixable at a plurality of angles,
said backrest holding member (61) is connected to said backrest portion (4) through a connecting mechanism consisting of a combination of a slot (75) extending along the longitudinal direction of said backrest portion (4) and a pin (76) being movably received in said slot (75) while said backrest portion (4) is movable along its longitudinal direction, so that no operation of said backrest holding member (61) is transmitted to said backrest portion (4) when said inclination angle of said backrest portion (4) is changed in said relatively uprighted state due to a movement of said pin (76) in said slot (75) while the operation of said backrest holding member (61) is transmitted to said backrest portion (4) in said most inclined state of said backrest portion (4) due to location of said pin (76) on an end portion of said slot (75) thereby moving said backrest portion (4) toward its lower end,
said control means comprises a control member (80) being rotatable about a rotation center (79) being at a constant position behind said rotation center (62) of said backrest holding member (61), and
said control member (80) is rotatably connected to said head guard portion (5), a junction (81) between said head guard portion (5) and said control member (80) being positioned on the back side of said backrest portion (4) beyond that between said head guard portion (5) and said backrest portion (4).

2. The seat for a baby carriage in accordance with claim 1, wherein
said backrest portion (4) and said head guard portion (5) are kept in shape by a backrest core member (9) and a head guard core member (10) being in the form of plates consisting of relatively rigid materials respectively,
said backrest core member (9) and said head guard core member (10) comprise a plurality of backrest plates (15, 16, 17) and a plurality of head guard plates (18, 19, 20) being divided by at least single parting lines extending in parallel with the side surfaces of said baby carriage respectively for allowing an operation for folding said baby carriage widthwise,
adjacent ones of said plurality of backrest plates (15, 16, 17) and those of said plurality of head guard plates (18, 19, 20) are hinged (23, 24, 25, 26) with each other on the back sides thereof respectively, and
respective said backrest plates (15, 16, 17) and respective said head guard plates (18, 19, 20) are hinged (27, 28, 29) with each other on the front sides thereof respectively.

3. The seat for a baby carriage in accordance with claim 2, wherein
said plurality of backrest plates (15, 16, 17) and said plurality of head guard plates (18, 19, 20) have end surfaces (30, 31, 32, 33, 34, 35, 36, 37) butting with each other between adjacent ones thereof when the same are substantially flush with each other.

4. A seat for a baby carriage which comprises a seat portion, a reclinable backrest portion connected thereto and a head guard portion movable between a first position generally flush with the backrest portion and a second position inclined to the backrest portion in which second position said head guard portion extends upwardly from the backrest portion when the latter is fully reclined, wherein the seat comprises a reclining mechanism which moves said backrest portion toward said seat portion when said backrest portion is being fully reclined to cause the head guard portion to move from its first position to its second position.

5. A seat for a baby carriage which is foldable widthwise and lengthwise and which comprises a reclinable backrest portion connected thereto and a head guard portion movable between a first position generally flush with the backrest portion and a second position inclined to the backrest portion in which second position said head guard portion extends upwardly from the backrest portion when the latter is fully reclined, wherein the backrest portion is connected to the seat portion to allow lengthwise displacement of said backrest portion relative to said seat portion when said portions are folded widthwise.

6. A seat for a baby carriage which is foldable widthwise and which comprises a seat portion, a reclinable backrest portion connected thereto and a head guard portion movable between a first position generally flush with the backrest portion and a second position inclined to the backrest portion in which second position said head guard portion extends upwardly from the backrest portion when the latter is fully reclined, wherein the backrest portion comprises a plurality of substantially rigid plates arranged to allow widthwise folding.

7. A seat for a baby carriage comprising:
a seat portion (3);
a backrest portion (4) being uprighted from the rear end of said seat portion (3) so that its inclination angle is changeable; and
a head guard portion (5) being rotated connected to the upper end of said backrest portion (4), wherein
said backrest portion (4) and said head guard portion (5) are substantially flush with each other in a relatively uprighted state of said backrest portion (4) while said head guard portion (5) is brought into a state being uprighted from the upper end of said backrest portion (4) in a most inclined state of said backrest portion (4),
said backrest portion (4) and said head guard portion (5) are kept in shape by a backrest core member (9) and a head guard core member (10) being in the form of plates consisting of relatively rigid materials respectively,
said backrest core member (9) and said head guard core member (10) comprise a plurality of backrest plates (15, 16, 17) and a plurality of head guard plates (18, 19, 20) being divided by at least single parting lines extending in parallel with the side surfaces of said baby carriage respectively for allowing an operation for folding said baby carriage widthwise,
adjacent ones of said plurality of backrest plates (15, 16, 17) and those of said plurality of head guard plates (18, 19, 20) are hinged (23, 24, 25, 26) with each other on the back sides thereof respectively, and
respective said backrest plates (15, 16, 17) and respective said head guard plates (18, 19, 20) are hinged (27, 28, 29) with each other on the front sides thereof respectively.

8. A seat for a baby carriage comprising:
a seat portion (3); and
a backrest portion (4) being uprighted from the rear end of said seat portion, wherein
said seat portion (3) and said backrest portion (4) are kept in shape by a seat core member (8) and a backrest core member (9) being in the form of plates consisting of relatively rigid materials respectively,
said seat core member (8) and said backrest core member (9) comprise three seat plates (12, 13, 14) and three backrest plates (15, 16, 17) being divided by pairs of parting lines extending in parallel with the side surfaces of said baby carriage respectively for allowing an operation for folding said baby carriage widthwise, while adjacent ones of said three seat plates (12, 13, 14) and those of said three backrest plates (15, 16, 17) are hinged (21, 22, 23, 24) with each other, and
said seat core member (8) and said backrest core member (9) are bent upwardly and frontwardly respectively while being so rotated that the upper surface of said seat core member (8) and the front surface of said backrest core member (9) approach to each other in response to said operation for folding said baby carriage,
said seat for a baby carriage further comprising:
a pair of belt mounting members (43, 44) being positioned on both sides of said baby carriage to approach to each other in response to said operation for folding said baby carriage widthwise, and
a flexible belt (42) extending across said pair of belt mounting members (43, 44) with its both end portions being mounted on said belt mounting members (43, 44) respectively,
the lower end of said backrest core member (9) being held by said belt (42).

9. a seat for a baby carriage comprising:
a seat portion (3);
a backrest portion (4) being uprighted from the rear end of said seat portion (3) so that its inclination angle is changeable; and
a head guard portion (5) rotatably connected to the upper end of said backrest portion (4), wherein
said backrest portion (4) and said head guard portion (5) are substantially flush with each other in a relatively uprighted state of said backrest portion (4) while said head guard portion (5) is brought into a state being uprighted from the upper end of said backrest portion (4) in a most inclined state of said backrest portion (4),
said seat portion (3), said backrest portion (4) and said head guard portion (5) are kept in shape by a seat core member (8), a backrest core member (9) and a head guard core member (10) being in the form of plates consisting of relatively rigid materials respectively, and
said seat core member (8), said backrest core member (9) and said head guard core member (10) comprise a plurality of seat plates (12, 13, 14), a plurality of backrest plates (15, 16, 17) and a plurality of head guard plates (18, 19, 20) being divided by at least single parting lines extending in parallel with the side surfaces of said baby carriage respectively, in order to allow an operation for folding said baby carriage widthwise.
